# FASCICULE DE BREVET EUROPEEN

(11) **EP 2 112 416 B1**
(45) Date de publication et mention de la délivrance du brevet: **15.02.2012**
(21) Numéro de dépôt: 09155669.6
(22) Date de dépôt: 20.03.2009
(51) Int. Cl.: F16L 37/092

(54) **Raccord instantané pour au moins un tube**
Steckanschluss für mindestens ein Rohr
Instant connection for at least one tube

(30) Priorité: 25.04.2008 FR 0802328
(43) Date de publication de la demande: 28.10.2009
(73) Titulaire: COMAP, 69008 Lyon (FR)
(72) Inventeur: Le Clinche, Pascal, 45000 Orleans (FR)
(74) Mandataire: Maureau, Philippe

(56) Documents cités:
- EP-A- 1 559 943
- EP-A- 1 972 844
- FR-A- 2 775 508
- FR-A- 2 824 618
- JP-A- 7 035 281
- US-A- 5 893 590

## Description

La présente invention concerne un raccord instantané pour au moins un tube.

Un tel raccord peut être utilisé pour réaliser la liaison entre plusieurs tubes ou entre un tube et un appareil, tel qu'un robinet ou un collecteur. Les tubes à raccorder servent notamment au transport de fluides omestiques.

Il est connu notamment du document EP1308662 document de réaliser un raccord instantané pour au moins un tube, comprenant :
- un corps comprenant au moins un embout tubulaire destiné à être introduit dans une extrémité du tube ;
- une coiffe disposée autour de l'embout, fixée au corps du raccord de façon à ménager entre l'embout et la coiffe un logement annulaire destiné à recevoir l'extrémité d'un tube à raccorder ;
- une bague d'accrochage reçue dans le logement ménagé entre l'embout et la coiffe, la bague d'accrochage comprenant des moyens d'accrochage destinés à coopérer avec la paroi du tube pour empêcher celui-ci de ressortir du logement en prenant appui contre la coiffe. Le document EP 1559943 présente un raccord instantané qui comprend en plus des moyens de visualisation de l'enfoncement du tube dans le logement comprenant une fenêtre ménagée dans la coiffe et un organe de visualisation destiné à permettre un changement d'aspect extérieur du raccord lorsqu'un tube est enfoncé ou lorsqu'un tube n'est pas enfoncé dans le logement ménagé entre l'embout et la coiffe, l'organe de visualisation comprenant au moins une portion de contact reçue entre la bague d'accrochage et l'embout tubulaire, la portion de contact étant conçue pour coopérer avec l'extrémité d'un tube lors l'enfoncement de celui-ci dans le logement ménagé entre l'embout et la coiffe, et représente ainsi les caractéristiques techniques du préambule de la revendication 1.

Il est connu en outre de visualiser l'enfoncement du tube en observant la position de l'extrémité de celui par une ouverture de visualisation, dans le cas de raccords non démontables, comme décrit dans le document EP1183480.

Ces dispositions donnent satisfaction en ce qu'elles permettent, dans des conditions normales d'utilisation, de visualiser le bon enfoncement du tube.

Toutefois, il est souhaitable d'améliorer la visualisation de l'enfoncement du tube dans toutes les conditions, et en particulier dans le cas ou la luminosité est faible ou l'angle de vision du raccord n'est pas favorable.

Il est connu par ailleurs d'utiliser dans un autre domaine technique des raccords serti des bagues de visualisation de l'enfoncement du tube, notamment décrit dans le document EP1154187.

Ces dispositions sont toutefois destinées à une utilisation pour un raccord serti dont la structure est beaucoup plus simple que celle d'un raccord instantanée, le blocage du tube étant assuré par le sertissage d'une simple douille autour de l'extrémité du tube. Il apparaît en outre que la solution proposée impose un encombrement axial important.

La présente invention a pour but de résoudre tout ou partie des inconvénients mentionnés ci-dessus.

A cet effet, la présente invention a pour objet un raccord selon le type précité tel que défini dans le préambule de la revendication 1, caractérisé en ce que, la bague d'accrochage comprend une fenêtre ménagée en regard de la fenêtre de la coiffe.

Les dispositions selon l'invention permettent d'obtenir une visualisation fiable de l'enfoncement du tube. Ces dispositions permettent également d'assurer une conception du raccord avec un encombrement limité dans la direction axiale, l'organe de visualisation ne dépassant pas nécessairement axialement de la bague d'accrochage pour être visible à l'extérieur de celle-ci.

Avantageusement, la bague d'accrochage comprend un logement pour au moins une partie de l'organe de visualisation.

Ces dispositions permettent d'assurer une conception du raccord avec un encombrement limité dans les directions axiale et radiale.

Avantageusement, l'organe de visualisation est situé dans au moins une position en regard d'une fenêtre de la coiffe.

Selon un mode de réalisation, l'organe de visualisation comprend au moins une portion destinée à traverser la coiffe par la fenêtre.

Avantageusement, l'organe de visualisation comprend au moins une portion destinée à traverser la bague d'accrochage par la fenêtre.

Selon un mode de réalisation, l'organe de visualisation est destiné à être au moins partiellement détruit lors de l'enfoncement du tube dans le logement entre la bague d'accrochage et l'embout tubulaire.

Avantageusement, l'organe de visualisation est au moins partiellement mobile entre une première position correspondant à un non enfoncement du tube et une seconde position correspondant à un enfoncement du tube dans le logement entre la bague d'accrochage et l'embout tubulaire.

Selon une possibilité, l'organe de visualisation est mobile en translation parallèlement à l'axe de l'embout du raccord.

Selon une autre possibilité, une partie de l'organe de visualisation est mobile radialement par rapport à l'embout.

Avantageusement, la portion de contact présente une partie en forme de came destinée à coopérer avec l'extrémité du tube de façon à transformer le mouvement d'introduction axial du tube en un mouvement radial d'au moins une portion de l'organe de visualisation.

Selon un mode de réalisation, l'organe de visualisation comprend des moyens de retenue contre un déplacement radial.

Avantageusement, les moyens de retenue comprennent un rebord destinés à prendre appui contre une partie de la bague d'accrochage.

Selon un mode de réalisation, l'organe de visualisation comprend une première partie mobile comportant la portion de contact et une seconde partie visible de l'extérieur du raccord et comprenant des moyens de retenue sur la première partie.

Selon une possibilité, l'organe de visualisation est logé en totalité dans la bague d'accrochage.

Selon une autre possibilité, l'organe de visualisation comprend au moins une portion extérieure destinée à être logée sur la partie extérieure de la coiffe.

Avantageusement, la portion extérieure de l'organe de visualisation comporte une partie d'anneau couvrant une portion de la périphérie de la coiffe.

Selon un mode de réalisation, la portion extérieure comporte au moins deux parties couvrant chacune une partie de la circonférence du raccord, ces deux parties étant liées par une zone de faiblesse ou des moyens de fixation permettant une libération des deux parties lors de l'introduction du tube et d'une poussée du tube contre la portion de contact.

Avantageusement, l'organe de visualisation comprend une bague s'étendant autour de l'embout.

Selon un autre mode de réalisation, l'organe de visualisation comprend une portion destinée à la visualisation destinée à être positionnée autour de l'extrémité du tube à raccorder et située en direction de l'extrémité libre de l'embout par rapport à la portion de contact de l'organe de visualisation.

Ces dispositions permettent de limiter l'écart entre le fond du logement et l'extrémité du tube en position d'enfoncement du tube car seule la portion de contact est positionnée entre l'extrémité du tube et le fond du logement. Ainsi l'encombrement axial du raccord peut être limité.

Avantageusement, l'organe de visualisation comporte des moyens de retour à une position initiale lors du retrait du tube en dehors du raccord.

Selon un mode de réalisation, les moyens de retour sont constitués par des moyens de pincement destinés à solidariser l'extrémité du tube de l'organe de visualisation.

Selon un autre mode de réalisation, dans lequel les moyens de retour comprennent des moyens de rappel élastiques.

L'invention sera mieux comprise à l'aide de la description détaillée qui est exposée ci-dessous en regard du dessin annexé dans lequel :
La figure 1 est une vue en perspective d'un premier raccord selon l'invention ;
La figure 2 est une vue de côté du raccord de figure 1, un tube étant enfoncé dans le raccord ;
La figure 3 est une vue en perspective d'une bague de visualisation du raccord de figure 1 ;
La figure 4 est une vue en coupe du raccord de figure 1, un tube étant partiellement enfoncé dans le raccord ;
La figure 5 est une vue en coupe du raccord de figure 1, un tube étant complètement enfoncé dans le raccord ;
La figure 6 est une vue en coupe du raccord d'un second raccord selon l'invention, un tube étant partiellement enfoncé dans le raccord ;
La figure 7 est une vue de côté du raccord de figure 6, un tube étant inséré dans le raccord ;
La figure 8 est une vue en perspective d'une bague de visualisation du raccord de figure 6 ;
La figure 9 est une vue en perspective d'une bague de visualisation et d'une bague d'accrochage du raccord de figure 6 ;
La figure 10 est une vue en coupe d'un troisième raccord selon l'invention, un tube étant partiellement enfoncé dans le raccord ;
La figure 11 est une vue de côté du raccord de figure 10, un tube étant partiellement enfoncé dans le raccord ;
La figure 12 est une vue de côté du raccord de figure 10, un tube étant complètement enfoncé dans le raccord ;
La figure 13 est une vue en perspective d'une partie d'une bague de visualisation du raccord de figure 10.
La figure 14 est une vue en coupe d'un quatrième raccord selon l'invention, un tube étant partiellement enfoncé dans le raccord ;
La figure 15 est une vue de côté du raccord de figure 14, un tube étant complètement enfoncé dans le raccord ;
La figure 16 est une vue en perspective d'une bague de visualisation du raccord de figure 10.
La figure 17 est une vue en coupe d'un cinquième raccord selon l'invention, un tube étant partiellement enfoncé dans le raccord ;
La figure 18 est une vue de côté du raccord de figure 17, un tube étant complètement enfoncé dans le raccord ;
La figure 19 est une vue en perspective d'un organe de visualisation du raccord de figure 17.
La figure 20 est une vue en coupe d'un sixième raccord selon l'invention, un tube étant partiellement enfoncé dans le raccord ;
La figure 21 est une vue en perspective d'un organe de visualisation du raccord de figure 20.
La figure 22 est une vue en perspective du raccord de figure 6 avec un outil de démontage ;
La figure 23 est une vue en coupe du raccord de figure 6, un outil de démontage étant positionné sur le raccord.

Dans la description détaillée qui va suivre des figures définies ci-dessus, les mêmes éléments ou les éléments remplissant des fonctions identiques pourront conserver les mêmes références de manière à simplifier la compréhension de l'invention.

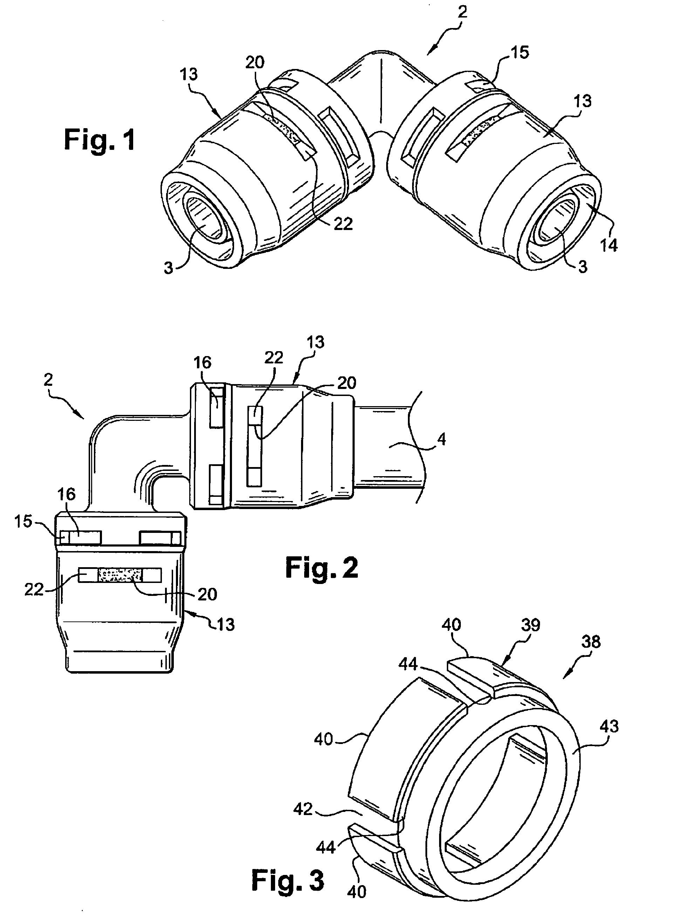

Ainsi que représenté sur les figures 1 à 5, selon un premier mode de réalisation de l'invention, un raccord instantané pour deux tubes comprend un corps 2 comprenant deux embouts tubulaires 3, chaque embout 3 étant destiné à être introduit dans une extrémité d'un tube 4. En particulier, ce raccord peut être destiné à des tubes de type multicouches comprenant une âme métallique 5 et une couche intérieure 6 et extérieure 7 en matière synthétique.

A la base de chaque embout 3, le corps 2 comporte une collerette annulaire 8 dans laquelle est ménagée une rainure périphérique 9.

Chaque embout 3 comprend des gorges 10 ménagées sur sa face extérieure dans lesquelles sont logés des joints annulaires d'étanchéité 12, destinés à être comprimés entre le fond d'une gorge et la paroi intérieure du tube.

Une coiffe tubulaire 13 est disposée autour de chaque embout 3, fixée à l'une de ses extrémités dans la rainure périphérique 9 de la collerette 8 et s'étendant vers l'extrémité libre de l'embout 6 de façon à ménager entre l'embout 6 et la coiffe 13 un logement annulaire 14 destiné à recevoir l'extrémité d'un tube 4 à raccorder.

La fixation de la coiffe 13 sur la collerette 8 est réalisé par des parois 15 d'étendant axialement vers l'intérieur d'une lumière 16 ménagée dans la coiffe.

La paroi intérieure de la coiffe comprend une première portion 17 sensiblement cylindrique, une seconde portion tronconique 18 et une troisième portion d'extrémité cylindrique 19. La première portion cylindrique 17 présente un diamètre supérieur à celui de la troisième partie 19 dont le diamètre est sensiblement égal au diamètre d'un tube à raccorder. La seconde partie tronconique 18 constitue une transition entre la première partie 17 et la troisième partie 19.

Deux fenêtres traversantes 20 sont ménagées dans la coiffe au niveau de la première portion 17. Ces fenêtres sont situées dans le fond d'une rainure 22 ménagée dans la coiffe 13. Les deux fenêtres 20 sont disposées de façon diamétralement opposées de part et d'autre de la coiffe 13 dans deux rainures 22 dont les fonds sont parallèles.

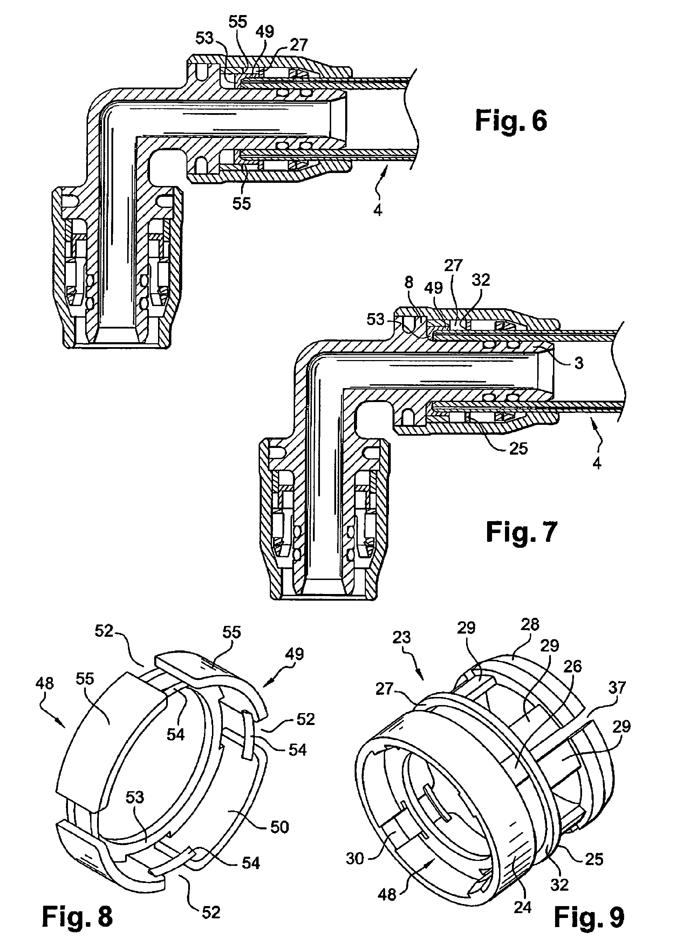

Une bague d'accrochage 23 du tube est reçue dans le logement 14 ménagé entre l'embout 6 et la coiffe 13. Les détails de cette bague 23 sont visibles notamment sur la figure 7 relative au deuxième mode de réalisation que nous décrirons par la suite.

Cette bague d'accrochage comprend une première portion annulaire 24, une deuxième portion annulaire 25 reliée à la première portion 24 par des ponts de matière 26 de façon à former entre la première portion 24 et la seconde portion 25 une gorge 27, et une troisième portion annulaire 28 d'accrochage reliée à la seconde portion par des pattes élastiques 29.

La première portion présente sur sa paroi intérieure des parties en saillie 30.

La gorge 27 formée entre la première et la seconde portion de la bague comprend un fond constitué par des ponts de matière 26 ménageant entre eux des fenêtres 32 traversant la bague d'accrochage 23.

Le diamètre intérieur de la première portion 24 de la bague est supérieur au diamètre intérieur de la seconde portion 25 de la bague 23.

Les fenêtres 32 dans la bague d'accrochage sont positionnées en regard des fenêtres 20 de la coiffe 13.

La troisième portion annulaire 28 de la bague d'accrochage 23 qui constitue la portion d'accrochage comprend, au niveau de son extrémité tournée vers l'extrémité libre de l'embout, une paroi tronconique 33 d'extrémité intérieure s'évasant en direction de l'extrémité libre de l'embout et une paroi tronconique 34 d'extrémité extérieure convergeant vers l'extrémité libre de l'embout 3.

En retrait de son extrémité, la portion d'accrochage comprend un anneau denté 35 logé dans une gorge de la portion d'accrochage et dont les dents 36 sont orientées vers l'intérieur du logement 14 et dont la pointe est tournée à l'opposé de l'extrémité libre de l'embout 3.

La portion d'accrochage 28 comporte une fente axiale 37 destinée à permettre une compression radiale de cette portion.

La bague d'accrochage 23 constitue un moyen d'accrochage destiné à coopérer avec la paroi du tube pour empêcher celui-ci de ressortir du logement.

En effet, lorsqu'un tube 4 est enfoncé dans le raccord, les dents 36 de la bague d'accrochage 23 coopèrent avec la paroi extérieure du tube 4. En cas de traction sur le tube 4 dans le sens du retrait du raccord, la bague d'accrochage 23 prend appui contre la seconde portion 18 de la paroi intérieure de la coiffe 13 par la paroi tronconique extérieure 33 de la portion d'accrochage 28 et empêche le retrait du tube 4 selon un mode de fonctionnement détaillé dans le document EP1308662.

Le raccord comprend de plus une bague de visualisation 38 de l'enfoncement du tube 4.

La bague de visualisation 38 est logée à l'intérieur de la bague d'accrochage 23, au niveau de la première portion 24 de la bague d'accrochage et de la gorge 27 comprenant les fenêtres 32 traversant la bague d'accrochage 23.

Cette bague de visualisation 38 comprend une première portion annulaire 39 présentant un premier diamètre, constituée par quatre segments 40 séparés par des fentes 42 dirigées axialement. Les fentes 42 sont destinées à recevoir les parties en saillie 30 de la bague d'accrochage 23 pour assurer le positionnement relatif de la bague d'accrochage 23 et de la bague de visualisation 38.

La bague 38 comprend en outre une seconde portion annulaire 43 de diamètre inférieur à celui de la première portion 39, à laquelle sont rattachés latéralement les quatre segments 40 de la première portion par une zone de liaison 44. Le diamètre extérieur de la seconde portion 43 de la bague correspond sensiblement au diamètre intérieur de la première portion 39 de la bague de visualisation 38.

La première portion 39 prend appui contre la collerette 8, et la seconde partie 43 est située par rapport à la première en direction de l'extrémité libre de l'embout 3. La seconde portion 43 de la bague de visualisation 38 est en regard des fenêtres 32 de la bague d'accrochage et de la fenêtre de la coiffe.

Ainsi, la seconde portion 43 de la bague 38 est visible par un utilisateur avant qu'un tube ne soit enfoncé dans le raccord comme cela est représenté sur la figure 1 et sur la partie gauche de la figure 2.

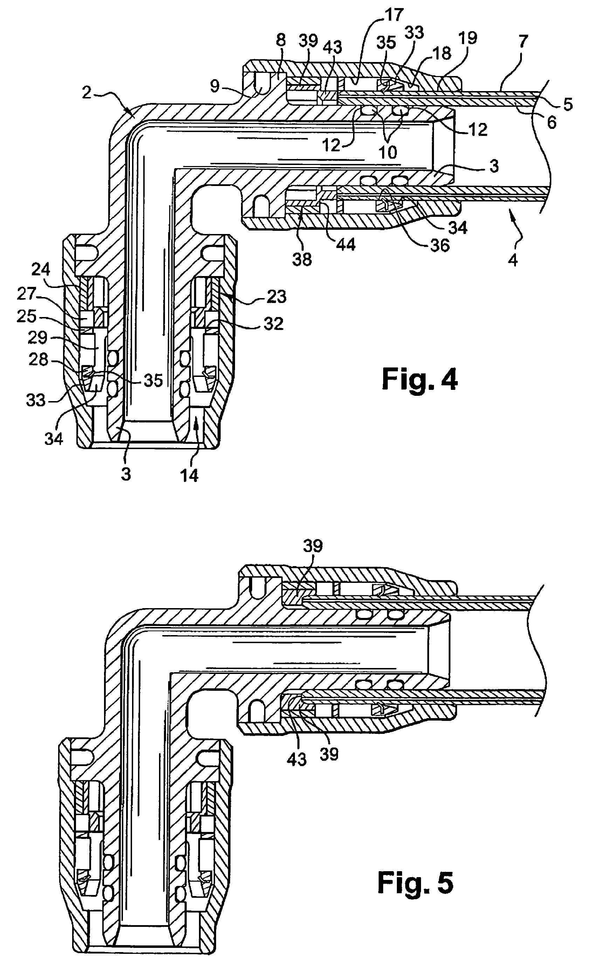

Comme représenté sur la figure 4, lors de l'introduction d'un tube 4 dans le raccord, l'extrémité du tube 4 prend appui contre la seconde portion 43 de la bague 38.

Lorsque le tube 4 est enfoncé au delà de la position représentée sur la figure 4, la zone de liaison 44 entre la première portion 39 et la deuxième 43 est rompue et la seconde portion 43 se loge à l'intérieur de la première portion 39 comme cela est visible sur la partie droite de la figure 5, dans une position qui correspond à un enfoncement complet du tube 4.

Dans la position de la partie droite de la figure 5, c'est-à-dire lorsque le tube est complètement enfoncé, la seconde portion de la bague n'est plus visible au travers des fenêtres de la bague d'accrochage et de la coiffe. Ainsi que représenté sur la partie droite de la figure 2, c'est la paroi du tube qui est visible à travers les fenêtres 20 de la coiffe et des fenêtres 32 de la bague d'accrochage.

Selon un second mode de réalisation représenté sur les figures 6 à 9, un raccord présente un corps 2, une coiffe 13 et une bague d'accrochage 23 semblables à ceux du premier mode de réalisation.

Le raccord comprend une bague de visualisation 48 logée à l'intérieur de la bague d'accrochage 23, au niveau de la première portion 24 de la bague d'accrochage et de la gorge 27 comprenant les fenêtres 32 traversant la bague d'accrochage 23.

La bague de visualisation 48 de ce second raccord comporte une première portion annulaire 49 comprenant quatre segments 50 séparés par des fentes 52, et une seconde portion annulaire 53 s'étendant radialement vers l'axe à partir d'un bord de la première portion 49.

La première portion 49 présente un diamètre intérieur sensiblement égal au diamètre extérieur d'un tube 4 à raccorder.

Le diamètre intérieur de la seconde portion 53 est inférieur au diamètre extérieur du tube.

La première portion 49 de la bague 48 comprend des ponts 54 qui s'étendent au travers des fentes 52 entre les segments 50, ces ponts 54 étant ménagés sur la paroi intérieure de la première portion 49.

Les fentes 52 de la première portion 49 permettent de recevoir les portions en saillie 30 de la bague d'accrochage 23 pour permettre de déterminer le positionnement radial de la bague de visualisation 48 par rapport à la bague d'accrochage 23.

La première portion 49 comporte des bossages extérieurs 55 destinés à prendre appui contre une paroi de la première portion 24 de la bague d'accrochage délimitant la gorge 27.

Ces dispositions permettent de maintenir une partie de la première portion 49 de la bague de visualisation 48 en regard des fenêtres 32 de la bague d'accrochage 23 et des fenêtres 20 la coiffe 13, l'aspect extérieur du raccord étant celui montré sur la figure 1 ou sur la partie gauche de la figure 2 en référence au premier mode de réalisation.

Ainsi, la seconde portion de la bague de visualisation est visible par un utilisateur.

Lors de l'introduction d'un tube dans le raccord, ainsi qu'illustré sur la figure 6, l'extrémité du tube 4 est logée à l'intérieur de la première portion 49 et vient au contact de la seconde portion 53.

En allant au-delà de la position représentée sur la figure 6, le tube 4 entraîne la bague de visualisation 48 axialement vers le fond du logement 14 jusqu'à venir en butée contre la collerette 8 située à la base de l'embout 3.

Dans la position de la partie droite de la figure 7, c'est-à-dire lorsque le tube 4 est complètement enfoncé, la première portion 49 de la bague n'est plus visible au travers des fenêtres 32 de la bague d'accrochage et des fenêtres 20 de la coiffe 13. La paroi du tube 4 est visible à travers les fenêtres 20 de la coiffe 13 et les fenêtres 32 de la bague d'accrochage 23, l'aspect extérieur du raccord étant celui montré sur la partie droite de la figure 2 en référence au premier mode de réalisation.

Il est à noter que les ponts 54 de la bague de visualisation coopèrent avec la paroi du tube 4 de façon à pincer celle-ci et à rendre la bague de visualisation 48 solidaire de l'extrémité du tube.

Ainsi, si le tube 4 est retiré, notamment lors d'un démontage comme nous le décrirons par la suite, la bague reprendra sa position représentée sur la figure 6, sa course vers l'extrémité libre de l'embout étant arrêtée en butée par la seconde partie 25 de la bague d'accrochage 23.

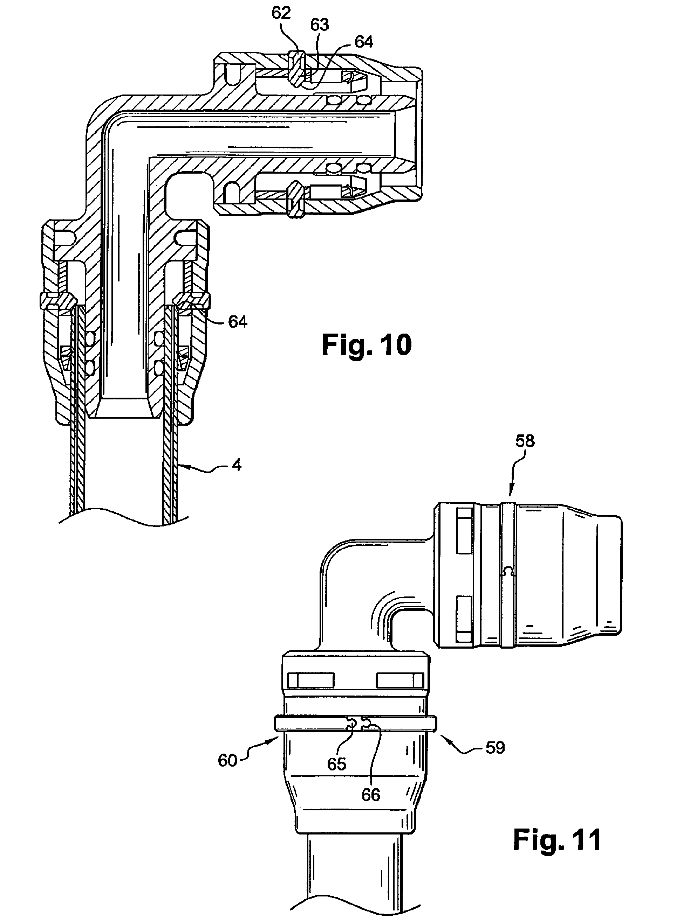

Selon un troisième mode de réalisation représenté sur les figures 10 à 13, un raccord présente un corps 2 et une bague d'accrochage 23 semblables à ceux du premier mode de réalisation.

Le raccord comprend également une coiffe 13 qui diffère de celle du premier mode de réalisation du raccord en ce qu'elle comprend une gorge annulaire 55 ménagée au niveau de la position axiale des fenêtres dans la coiffe.

Le raccord comprend également une bague de visualisation 58 destinée à être logée pour partie dans la gorge annulaire 55 de la coiffe 13.

La bague de visualisation 58 comprend deux parties séparables 59, 60. Chaque partie 59, 60 comprend une première portion annulaire 62 logée dans la gorge annulaire 55 de la coiffe 13, couvrant la moitié de la périphérie de la coiffe 13.

Chaque partie 59, 60 comprend de plus une seconde portion 63 s'étendant radialement vers l'intérieur du raccord à partir de la première portion annulaire 62, cette seconde portion traversant la fenêtre ménagée dans la coiffe et la fenêtre ménagée dans la bague d'accrochage. La seconde portion 63 comprend à son extrémité une partie en forme de came destinée à coopérer avec l'extrémité du tube 4 de façon à transformer le mouvement d'introduction axial du tube en un mouvement radial de la partie de bague.

En particulier la partie en forme de came comprend une surface inclinée 64 par rapport à l'axe de l'embout destinée à prendre appui contre l'extrémité du tube 4.

La seconde partie 63 est guidée en translation dans la direction radiale par la gorge 27 ménagée dans la bague d'accrochage, les fenêtres 20, 32 ménagées dans la bague d'accrochage 23 et la coiffe 13.

Les deux parties 59, 60 de la bague sont reliées au niveau des deux extrémités des premières portions annulaires 62 par des moyens de fixation par complémentarité de forme, une saillie de forme arrondie 65 comprenant une dépouille ménagée à l'extrémité d'une partie annulaire 62 d'une première partie 59 de la bague de visualisation 58 étant reçue dans un logement de forme complémentaire 66 ménagée à l'extrémité d'une portion annulaire 62 d'une seconde partie 60 de la bague 58.

En l'absence d'un tube 4 introduit dans le raccord, la bague de visualisation 58 constitue un repère visible sur l'extérieur de la coiffe 13 par ses deux premières portions annulaires 62, comme représenté sur la partie droite de la figure 11.

Lors de l'introduction d'un tube dans le raccord, comme cela est représenté sur la partie gauche de la figure 10, l'extrémité du tube vient au contact de la surface inclinée 64 de chaque seconde portion des deux parties 59, 60 de la bague 58.

En dépassant la position représentée sur la figure 10 et en enfonçant complètement le tube dans le raccord, le tube 4 pousse les deux parties de bague 59, 60 radialement vers l'extérieur du raccord. Sous la poussée exercée, les moyens de fixation 65, 66 se détachent, comme représenté sur la partie gauche de la figure 11, puis les deux parties de la bague 59, 60 se désolidarise de la coiffe 13.

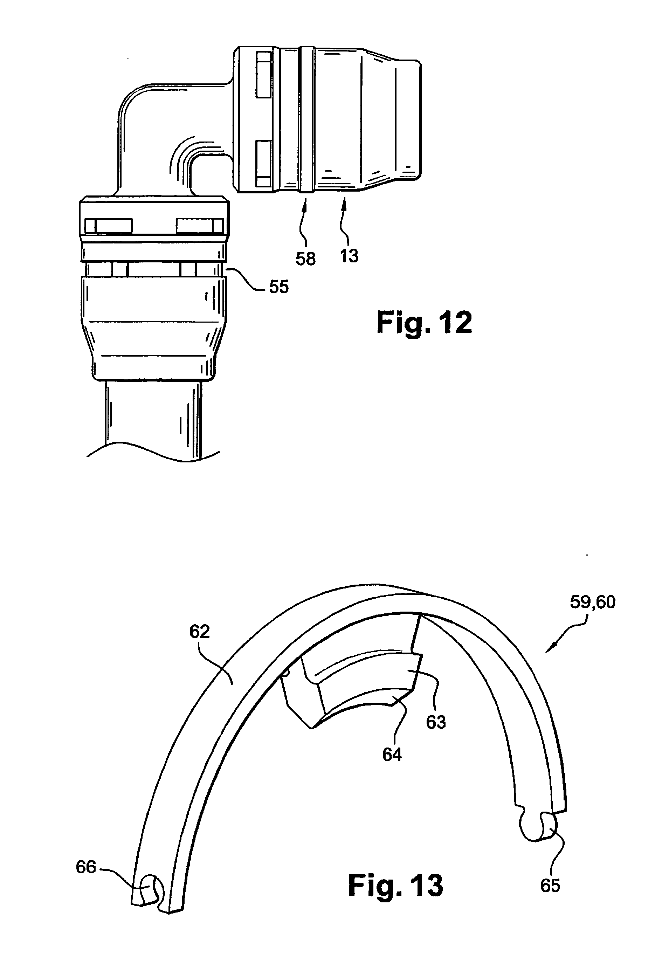

L'aspect de la coiffe après la désolidarisation des deux parties de la bague 59, 60 est représenté sur la partie gauche de la figure 12. La bague 58 n'est plus visible sur le raccord.

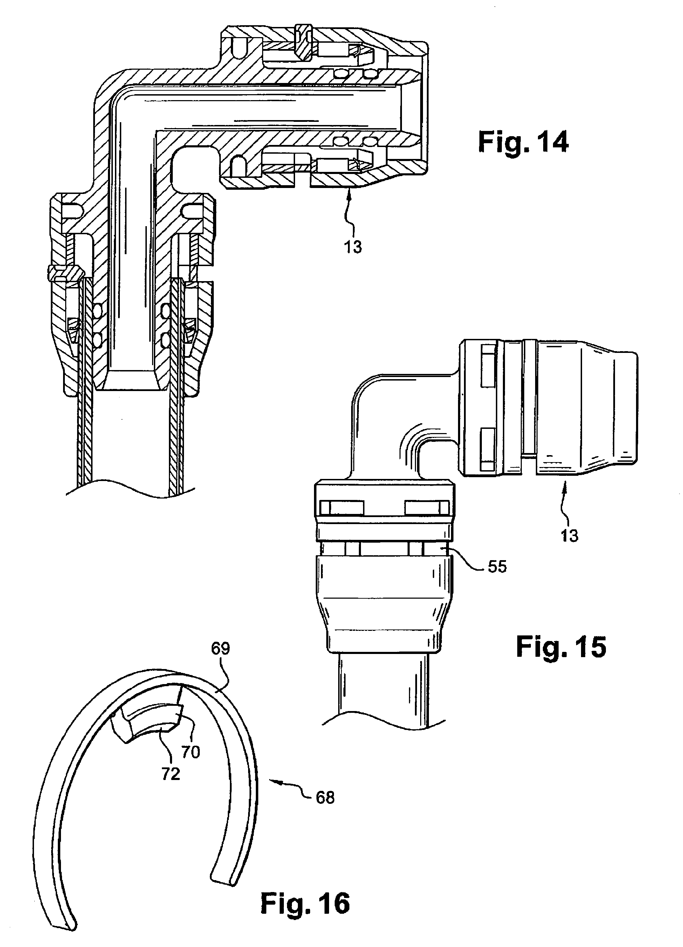

Selon un quatrième mode de réalisation représenté sur les figures 14 à 16, un raccord présente un corps 2 et une bague d'accrochage 23 semblables à ceux du premier mode de réalisation, et une coiffe 13 semblable à celle décrite pour le troisième mode de réalisation.

Le raccord comprend également une bague de visualisation 68 destinée à être logée pour partie dans la gorge annulaire de la coiffe.

La bague de visualisation 68 comprend une première portion annulaire 69 logée dans la gorge annulaire 55 de la coiffe 13, couvrant plus de la moitié de la périphérie de la coiffe.

La bague de visualisation 68 comprend de plus une seconde portion 70 semblable à celle décrite pour les secondes portions 63 des parties 59, 60 de la bague de visualisation 58 du raccord selon le troisième mode de réalisation.

Ainsi, cette seconde portion 70 s'étend radialement vers l'intérieur du raccord à partir de la portion annulaire 69 et traverse une fenêtre 20 ménagée dans la coiffe et une fenêtre 32 ménagée dans la bague d'accrochage. La seconde portion 70 comprend à son extrémité une partie en forme de came destinée à coopérer avec l'extrémité du tube de façon à transformer le mouvement d'introduction axial du tube en un mouvement radial de la partie de bague. La partie en forme de came comprend une surface inclinée 72 par rapport à l'axe de l'embout 3 destinée à prendre appui contre l'extrémité du tube 4.

En l'absence d'un tube introduit dans le raccord, la bague de visualisation constitue un repère visible sur l'extérieur de la coiffe, comme représenté sur la partie droite de la figure 15.

Lors de l'introduction d'un tube dans le raccord, comme cela est représenté sur la partie gauche de la figure 14, l'extrémité du tube vient au contact de la surface inclinée de la partie en forme de came.

En dépassant la position représentée sur la partie gauche de la figure 14 et en enfonçant complètement le tube 4 dans le raccord, le tube 4 pousse la bague 68 radialement vers l'extérieur du raccord. Sous la poussée exercée, la première portion annulaire de la bague 69 se déforme.

Selon des variantes correspondant à différentes dimensions de la portion annulaire, celle-ci peut rester en position déformée sur le raccord, la déformation étant visible par un utilisateur, qui peut également retirer la bague déformée, ou se désolidariser sans intervention supplémentaire de l'utilisateur.

L'aspect de la coiffe après la désolidarisation de la bague 68 étant représenté sur la partie gauche de la figure 14.

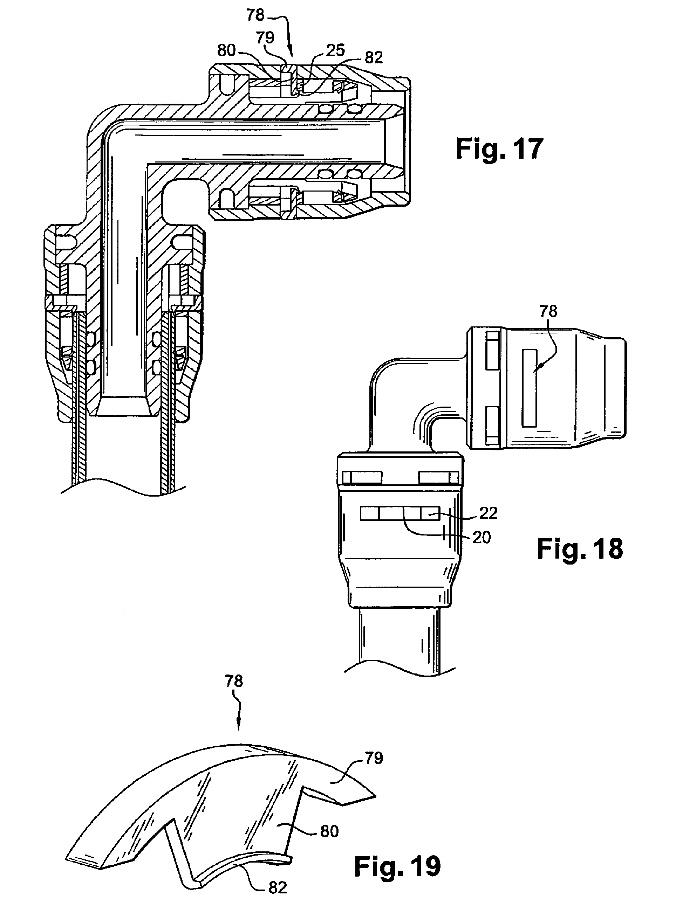

Selon un cinquième mode de réalisation représenté sur les figures 17 à 19, un raccord comprend un corps 2, une coiffe 13 et une bague d'accrochage 23 semblables à ceux du premier mode de réalisation.

Le raccord comprend également deux organes de visualisation constitué chacun par un insert 78.

Chaque insert 78 comprend une première portion 79 destiné à être logé dans la rainure 12 dans laquelle est ménagée une fenêtre traversante 20 de la coiffe 13. Le profil extérieur de cette première portion est avantageusement réalisé de façon à compléter la forme générale de la coiffe 13.

Chaque insert 78 comprend de plus une seconde partie 80 s'étendant radialement vers l'intérieur du raccord à partir de la première portion 79 et traverse une fenêtre 20 ménagée dans la coiffe et une fenêtre 32 ménagée dans la bague d'accrochage. La seconde portion 80 comprend à son extrémité un rebord de retenue 82 s'étendant en direction de l'extrémité libre de l'embout 3 et destiné à prendre appui à l'intérieur de la bague d'accrochage 23, en particulier sur le bord de la fenêtre 32 ménagée dans la bague d'accrochage, au niveau de la seconde portion 25 de cette bague.

L'insert 78 est ainsi maintenu en position par l'appui d'une part de sa première portion 79 sur le fond de la rainure 22 dans laquelle la fenêtre 20 traversant de la coiffe 13 est ménagée, et d'autre part par l'appui du bord de retenue 82 contre de la bague d'accrochage 23.

En l'absence d'un tube 4 enfoncé complètement dans le raccord, l'insert de visualisation 78 constitue un repère visible sur l'extérieur de la coiffe 13 par sa première portion 79, comme représenté sur la partie droite de la figure 18.

Lors de l'introduction d'un tube dans le raccord, comme cela est représenté sur la partie gauche de la figure 17, l'extrémité du tube 4 vient au contact du rebord de retenue 82 de l'insert 78.

En dépassant la position représentée sur la partie gauche de la figure 17 et en enfonçant complètement le tube 4 dans le raccord, le tube pousse le rebord de retenue 82 de façon à supprimer l'appui contre le bord de la fenêtre 32 ménagée dans la bague d'accrochage, puis à repousser l'insert 78 radialement vers l'extérieur du raccord.

Ainsi, l'insert 78 se désolidarise de la coiffe 13. L'aspect de la coiffe après la désolidarisation des inserts 78 est représenté sur la partie gauche de la figure 18.

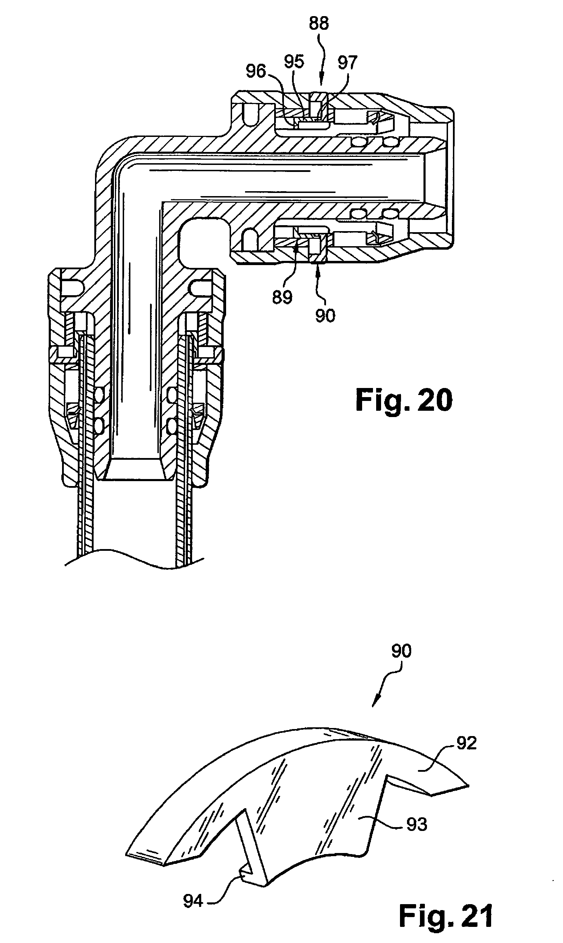

Selon un sixième mode de réalisation représenté sur les figures 20 et 21, un raccord comprend un corps 2, une coiffe 13 et une bague d'accrochage 23 semblables à ceux du premier mode de réalisation.

Le raccord comprend également un organe de visualisation 88 comprenant une bague intérieure 89 au raccord et deux inserts 90.

Chaque insert 90 comprend une première portion 92 destiné à être logé dans la rainure 12 dans laquelle est ménagée une fenêtre traversante 20 de la coiffe 13. Le profil extérieur de cette première portion est avantageusement réalisé de façon à compléter la forme générale de la coiffe 13.

Chaque insert 90 comprend de plus une seconde portion 93 s'étendant radialement vers l'intérieur du raccord à partir de la portion annulaire et traversant la fenêtre 20 ménagée dans la coiffe 13 et la fenêtre 32 ménagée dans la bague d'accrochage 23. La seconde portion 93 comprend à son extrémité un rebord de retenue 94 destiné à prendre appui contre un rebord de la bague intérieure 89. Le rebord de retenue 94 est orienté vers la base de l'embout 3.

La bague intérieure 89 est logée à l'intérieur de la bague d'accrochage 23, au niveau de la première portion 24 de la bague d'accrochage 23 et de la gorge 27 comprenant les fenêtres 32 traversant la bague d'accrochage 23.

La bague intérieure 89 comporte une première portion annulaire 95, et une seconde portion annulaire 96 s'étendant radialement vers l'axe à partir d'un bord de la première portion 95.

La première portion 95 présente un diamètre sensiblement égal au diamètre extérieur d'un tube 4 à raccorder.

Le diamètre intérieur de la seconde portion 96 est inférieur au diamètre extérieur du tube.

La première portion 95 annulaire comprend sur son extrémité tournée vers l'extrémité libre de l'embout 3 un bord arrière 97 contre lequel est appuyé le rebord de retenue 94 des inserts 90.

Chaque insert 90 est ainsi maintenu en position par l'appui d'une part de sa première portion 92 sur le fond de la rainure 22 dans laquelle la fenêtre 20 traversant de la coiffe 13 est ménagée, et d'autre part par l'appui du bord de retenue 94 sur la bague intérieure.

En l'absence d'un tube 4 enfoncé complètement dans le raccord, les inserts 90 représentent un repère visible sur l'extérieur de la coiffe par leur première portion 92, l'aspect extérieur du raccord étant similaire à celui représenté sur la partie droite du raccord pour le cinquième mode de réalisation.

Lors de l'introduction d'un tube 4 dans le raccord, ainsi qu'illustré sur la partie gauche de la figure 20, l'extrémité du tube 4 est logée à l'intérieur de la première portion 95 et vient au contact de la seconde portion 96.

En allant au-delà de la position représentée sur la figure 20, le tube 4 entraîne la bague intérieure 89 axialement vers le fond du logement 14 jusqu'à venir en butée contre la collerette 8 située à la base de l'embout 3.

Le bord 97 de la bague intérieure 89 se déplaçant, celui-ci ne retient plus le rebord de retenue 94 de l'insert 90.

Ainsi, l'insert 90 se désolidarise de la coiffe. L'aspect de la coiffe 13 après la désolidarisation des inserts 90 étant représenté sur la partie gauche de la figure 21.

Il est à noter que les raccords représentés sur les figures 1 à 23 sont des raccords de type démontable.

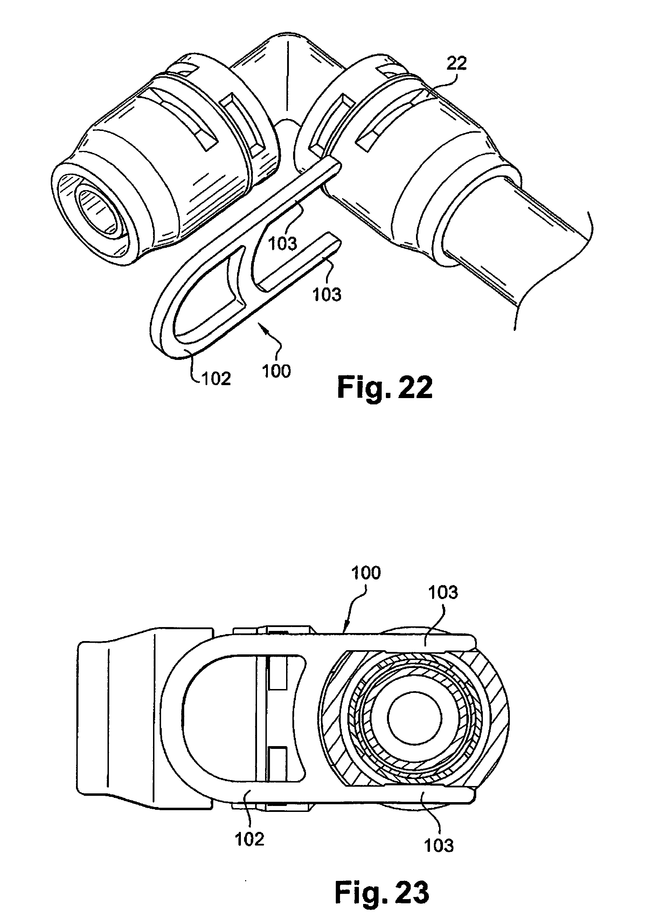

Dans le cas ou un utilisateur souhaite démonter un tube d'un raccord selon l'invention, il est possible d'utiliser un outil 100 tel que représenté sur les figures 22 et 23.

L'outil sous forme d'agrafe comporte une partie proximale 102 de préhension par un utilisateur et une partie distale comprenant deux pattes parallèles 103 destinées à être glissées dans les deux rainures 22 de la coiffe 13 et dans la gorge 27 ménagée entre la première et la seconde portion de la bague d'accrochage 23. Grâce à ce positionnement, la bague d'accrochage 23 est maintenue en position et le tube peut être retiré sans entraîner la bague d'accrochage. Ceci évite que la bague d'accrochage coopère avec la coiffe et ne s'oppose au retrait du tube.

Ainsi la fenêtre dans la coiffe, ainsi que la gorge ménagée dans la bague d'accrochage servent à la fois pour la visualisation de l'enfoncement du tube et le démontage du raccord.

Il est à noter que l'utilisation de l'outil représenté n'est pas obligatoire pour réaliser le démontage du tube et que d'autres outils peuvent être utilisés pour retenir la bague d'accrochage.

Les premier, second et sixième modes de réalisation décrits ci-dessus permettent dans le cas de corps de raccords métalliques, notamment en métaux cuivreux, d'obtenir une isolation entre la collerette (8) du corps du raccord et la portée frontale du tube à âme métallique, notamment en aluminium, évitant une dégradation par couple galvanique. Ces dispositions permettent d'éviter d'ajouter une rondelle d'isolation entre la collerette du corps métallique et l'extrémité du tube.

Les premier et second modes de réalisation ne génèrent aucun déchet sur le chantier lors de l'installation.

Les troisième, quatrième, cinquième et sixième modes de réalisation permettent un repérage particulièrement visible de la différence d'aspect du raccord avec ou sans enfoncement du tube.

Selon une variante d'un raccord selon l'invention non représenté, des moyens de rappel, notamment sous forme d'un ressort, peuvent être prévu pour ramener l'organe de visualisation dans sa position initiale lors d'un démontage du tube.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Raccord instantané pour au moins un tube (4), comprenant :
- un corps (2) comprenant au moins un embout tubulaire (3) destiné à être introduit dans une extrémité du tube (4) ;
- une coiffe (13) disposée autour de l'embout (3), fixée au corps (2) du raccord de façon à ménager entre l'embout (3) et la coiffe (13) un logement annulaire (14) destiné à recevoir l'extrémité d'un tube (4) à raccorder ;
- une bague d'accrochage (23) reçue dans le logement (14) ménagé entre l'embout (3) et la coiffe (13), la bague d'accrochage (23) comprenant des moyens d'accrochage (35) destinés à coopérer avec la paroi du tube (4) pour empêcher celui-ci de ressortir du logement en prenant appui contre la coiffe (13) ;
des moyens de visualisation de l'enfoncement du tube (4) dans le logement (14) comprenant une fenêtre (20) ménagée dans la coiffe (13) et un organe de visualisation (38, 48, 58, 68, 78, 88) destiné à permettre un changement d'aspect extérieur du raccord lorsqu'un tube est enfoncé ou lorsqu'un tube n'est pas enfoncé dans le logement (14) ménagé entre l'embout (3) et la coiffe (13), l'organe de visualisation comprenant au moins une portion de contact (43, 53, 64, 72, 82, 96) reçue entre la bague d'accrochage (23) et l'embout tubulaire (3), la portion de contact étant conçue pour coopérer avec l'extrémité d'un tube (4) lors de l'enfoncement de celui-ci dans le logement (14) ménagé entre l'embout (3) et la coiffe (13), **caractérisé en ce que**
la bague d'accrochage (23) comprend une fenêtre (32) ménagée en regard de la fenêtre (20) de la coiffe (13).

2. Raccord selon la revendication 1, dans lequel la bague d'accrochage (23) comprend un logement pour au moins une partie de l'organe de visualisation (38, 48, 58, 68, 78, 88).

3. Raccord selon l'une des revendications précédentes, dans lequel l'organe de visualisation (38, 48) est situé dans au moins une position en regard d'une fenêtre (20) de la coiffe (13).

4. Raccord selon l'une des revendications précédentes, dans lequel l'organe de visualisation comprend au moins une portion destinée à traverser la coiffe (13) par la fenêtre (20).

5. Raccord selon l'une des revendications précédentes et selon la revendication 3, dans lequel l'organe de visualisation comprend au moins une portion destinée à traverser la bague d'accrochage (23) par la fenêtre (32).

6. Raccord selon l'une des revendications précédentes, dans lequel l'organe de visualisation (38) est destiné à être au moins partiellement détruit lors de l'enfoncement du tube (4) dans le logement (14) entre la bague d'accrochage (23) et l'embout tubulaire (3).

7. Raccord selon l'une des revendications précédentes, dans lequel l'organe de visualisation (38, 48, 58, 68, 78, 88) est au moins partiellement mobile entre une première position correspondant à un non enfoncement du tube (4) et une seconde position correspondant à un enfoncement du tube (4) dans le logement (14) entre la bague d'accrochage (23) et l'embout tubulaire (3).

8. Raccord selon la revendication 7, dans lequel une partie (43, 48, 89) de l'organe de visualisation est mobile en translation parallèlement à l'axe de l'embout (3) du raccord.

9. Raccord selon l'une des revendications 7 ou 8, dans lequel une partie (59, 60, 68, 78, 88) de l'organe de visualisation est mobile radialement par rapport à l'embout (3).

10. Raccord selon la revendication 9, dans lequel la portion de contact (64, 72) présente une partie en forme de came destinée à coopérer avec l'extrémité du tube de façon à transformer le mouvement d'introduction axial du tube en un mouvement radial d'au moins une portion de l'organe de visualisation (58, 68).

11. Raccord selon la revendication 9 et suivantes, dans lequel l'organe de visualisation (78, 88) comprend des moyens de retenue (82, 94) contre un déplacement radial.

12. Raccord selon la revendication 11, dans lequel les moyens de retenue comprennent un rebord (82) destinés à prendre appui contre une partie de la bague d'accrochage (23).

13. Raccord selon la revendication 11, dans lequel l'organe de visualisation (88) comprend une première partie mobile comportant la portion de contact (96) et une seconde partie (90) visible de l'extérieur du raccord et comprenant des moyens de retenue (94) sur la première partie (89).

14. Raccord selon l'une des revendications précédentes, dans lequel l'organe de visualisation (38, 48) est logé en totalité dans la bague d'accrochage.

15. Raccord selon l'une des revendications précédentes, dans lequel l'organe de visualisation (58, 68, 78, 88) comprend au moins une portion (62, 69, 79, 92) extérieure destinée à être logée sur la partie extérieure de la coiffe (13).

16. Raccord selon la revendication 15, dans lequel la portion extérieure (62, 69, 79, 92) de l'organe de visualisation comporte une partie d'anneau couvrant une portion de la périphérie de la coiffe (13).

17. Raccord selon la revendication 15 dans lequel la portion extérieure (62, 69, 79, 92) comporte au moins deux parties (59, 60) couvrant chacune une partie de la circonférence du raccord, ces deux parties étant liées par une zone de faiblesse ou des moyens de fixation (65, 66) permettant une libération des deux parties lors de l'introduction du tube (4) et d'une poussée du tube (4) contre la portion de contact (64).

18. Raccord selon l'une des revendications précédentes, dans lequel l'organe de visualisation comprend une bague (38, 48, 58, 68, 89) s'étendant autour de l'embout (3).

19. Raccord selon l'une des revendications précédentes, dans lequel l'organe de visualisation (48, 88) comprend une portion destinée à la visualisation (49, 95) destinée à être positionnée autour de l'extrémité du tube à raccorder et située en direction de l'extrémité libre de l'embout par rapport à la portion de contact (53, 96) de l'organe de visualisation.

20. Raccord selon l'une des revendications précédentes, dans laquelle l'organe de visualisation (48) comporte des moyens de retour à une position initiale lors du retrait du tube (4) en dehors du raccord.

21. Raccord selon la revendication 20, dans lequel les moyens de retour sont constitués par des moyens de pincement (54) destinés à solidariser l'extrémité du tube de l'organe de visualisation (48).

22. Raccord selon la revendication 20, dans lequel les moyens de retour comprennent des moyens de rappel élastiques.

## Claims

1. A quick-connect coupling for at least one tube (4), comprising:
- a body (2) comprising at least one tubular tip (3) intended to be inserted into one end of the tube (4);
- a cap (13) positioned around the tip (3), secured to the body (2) of the coupling so as to form, between the tip (3) and the cap (13), an annular housing (14) intended to receive the end of the tube (4) to be connected;
- a catching ring (23) received in the housing (14) formed between the tip (3) and the cap (13), the catching ring (23) comprising catching means (35) intended to cooperate with the wall of the tube (4) to prevent the latter from leaving the housing by bearing against the cap (13);
- means for viewing the pushing of the tube (4) into the housing (14) comprising a window (20) formed in the cap (13) and viewing member (38, 48, 58, 68, 78, 88) intended to allow a change to the outside appearance of the coupling when a tube is pushed in or when a tube is not pushed into the housing (14) formed between the tip (3) and the cap (13), the viewing member comprising at least one contact portion (43, 53, 64, 72, 82, 96) received between the catching ring (23) and the tubular tip (3), the contact portion being designed to cooperate with the end of a tube (4) when the latter is pushed into the housing (14) formed between the tip (3) and the cap (13),
**characterized in that** the catching ring (23) comprises a window (32) opposite the window (20) of the cap (13).

2. The coupling according to claim 1, wherein the catching ring (23) comprises a housing for at least part of the viewing member (38, 48, 58, 68, 78, 88).

3. The coupling according to one of the preceding claims, wherein the viewing member (38, 48) is situated in at least one position opposite a window (20) of the cap (13).

4. The coupling according to one of the preceding claims, wherein the viewing member comprises at least one portion intended to pass through the cap (13) through the window (20).

5. The coupling according to one of the preceding claims and according to claim 3, wherein the viewing member comprises at least one portion intended to pass through the catching ring (23) through the window (32).

6. The coupling according to one of the preceding claims, wherein the viewing member (38) is intended to be at least partially destroyed when the tube (4) is pushed into the housing (14) between the catching ring (23) and the tubular tip (3).

7. The coupling according to one of the preceding claims, wherein the viewing member (38, 48, 58, 68, 78, 88) is at least partially movable between a first position corresponding to a non-pushing in of the tube (4) and the second position corresponding to a pushing in of the tube (4) into the housing (14) between the catching ring (23) and the tubular tip (3).

8. The coupling according to claim 7, wherein a portion (43, 48, 89) of the viewing member is translationally mobile parallel to the axis of the tip (3) of the coupling.

9. The coupling according to one of claims 7 or 8, wherein a portion (59, 60, 68, 78, 88) of the viewing member is radially movable relative to the tip (3).

10. The coupling according to claim 9, wherein the contact portion (64, 72) has a cam-shaped portion intended to cooperate with the end to so as to convert the axial insertion movement of the tube into a radial movement of at least one portion of the viewing member (58, 68).

11. The coupling according to claim 9 and following, wherein the viewing member (78, 88) comprises retaining means (82, 94) against a radial movement.

12. The coupling according to claim 11, wherein the retaining means comprise a rim (82) intended to bear against a portion of the catching ring (23).

13. The coupling according to claim 11, wherein the viewing member (88) comprises a first mobile portion including the contact portion (96) and a second portion (90) visible from outside the coupling and comprising retaining means (94) on the first portion (89).

14. The coupling according to one of the preceding claims, wherein the viewing member (38, 48) is completely housed in the catching ring.

15. The coupling according to one of the preceding claims, wherein the viewing member (58, 68, 78, 88) comprises at least one outer portion (62, 69, 79, 92) intended to be housed on the outer portion of the cap (13).

16. The coupling according to claim 15, wherein the outer portion (62, 69, 79, 92) of the viewing member comprises a ring portion covering a portion of the periphery of the cap (13).

17. The coupling according to claim 15, wherein the outer portion (62, 69, 79, 92) comprises at least two portions (59, 60) each covering a portion of the circumference of the coupling, said two portions being connected by a weak area or by fastening means (65, 66) making it possible to release the two portions during the insertion of the tube (4) and a thrust of the tube (4) against the contact portion (64).

18. The coupling according to one of the preceding claims, wherein the viewing member comprises a ring (38, 48, 58, 68, 89) extending around the tip (3).

19. The coupling according to one of the preceding claims, wherein the viewing member (48, 88) comprises portion intended for viewing (49, 95) intended to be positioned around the end of the tube to be connected and situated toward the free end of the tip relative to the contact portion (53, 96) of the viewing member.

20. The coupling according to one of the preceding claims, wherein the viewing member (48) comprises means for returning to an initial position when the tube (4) is removed outside the coupling.

21. The coupling according to claim 20, wherein the return means are made up of pinching means (54) intended to secure the end of the tube with the viewing member (48).

22. The coupling according to claim 20, wherein the return means comprise elastic return means.

## Patentansprüche

1. Rohrschnellkupplung für mindestens ein Rohr (4), die umfasst:
- einen Körper (2), der mindestens einen rohrförmigen Ansatz (3) umfasst, der dazu bestimmt ist, in ein Ende des Rohrs (4) eingeführt zu sein,
- eine um den Ansatz (3) angeordnete, am Körper (2) der Kupplung derart befestigte Kappe (13), dass zwischen dem Ansatz (3) und der Kappe (13) eine ringförmige Aufnahme (14) ausgebildet wird, die dazu bestimmt ist, das Ende eines zu kuppelnden Rohrs (4) aufzunehmen,
- einen in der zwischen dem Ansatz (3) und der Kappe (13) ausgebildeten Aufnahme (14) aufgenommenen Befestigungsring (23), wobei der Befestigungsring (23) Befestigungsmittel (35) umfasst, die dazu bestimmt sind, mit der Wand des Rohrs (4) zusammenzuarbeiten, um zu verhindern, dass dieses die Aufnahme verlässt, indem er sich auf der Kappe (13) abstützt,
- Visualisierungsmittel des Eindringens des Rohrs (4) in die Aufnahme (14), die ein in die Kappe (13) eingearbeitetes Fenster (20) und ein Visualisierungsorgan (38, 48, 58, 68, 78, 88) umfassen, das dazu bestimmt ist, eine Änderung des äußeren Aussehens der Kupplung zu erlauben, wenn ein Rohr in die zwischen dem Ansatz (3) und der Kappe (13) ausgebildete Aufnahme (14) eingeführt oder nicht eingeführt ist, wobei das Visualisierungsorgan mindestens einen zwischen dem Befestigungsring (23) und dem rohrförmigen Ansatz (3) aufgenommenen Kontaktabschnitt (43, 53, 64, 72, 82, 96) umfasst, wobei der Kontaktabschnitt ausgebildet ist, um mit dem Ende eines Rohrs (4) beim Eindringen desselben in die zwischen dem Ansatz (3) und der Kappe (13) ausgebildete Aufnahme (14) zusammenzuarbeiten,
**dadurch gekennzeichnet, dass**
der Befestigungsring (23) ein gegenüber dem Fenster (20) der Kappe (13) ausgebildetes Fenster umfasst.

2. Kupplung nach Anspruch 1, wobei der Befestigungsring (23) eine Aufnahme für mindestens einen Teil des Visualisierungsorgans (38, 48, 58, 68, 78, 88) umfasst.

3. Kupplung nach einem der vorhergehenden Ansprüche, wobei sich das Visualisierungsorgan (38, 48) in mindestens einer Stellung gegenüber eines Fensters (20) der Kappe (13) befindet.

4. Kupplung nach einem der vorhergehenden Ansprüche, wobei das Visualisierungsorgan mindestens einen Abschnitt umfasst, der dazu bestimmt ist, die Kappe (13) durch das Fenster (20) zu durchqueren.

5. Kupplung nach einem der vorhergehenden Ansprüche und nach Anspruch 3, wobei das Visualisierungsorgan mindestens einen Abschnitt umfasst, der dazu bestimmt ist, den Befestigungsring (23) durch das Fenster (32) zu durchqueren.

6. Kupplung nach einem der vorhergehenden Ansprüche, wobei das Visualisierungsorgan (38) dazu bestimmt ist, beim Eindringen des Rohrs (4) in die Aufnahme (14) zwischen dem Befestigungsring (23) und dem rohrförmigen Ansatz (3) mindestens teilweise zerstört zu werden.

7. Kupplung nach einem der vorhergehenden Ansprüche, wobei das Visualisierungsorgan (38, 48, 58, 68, 78, 88) zwischen einer ersten Stellung, die einem Nicht-Eindringen des Rohrs (4) entspricht, und einer zweiten Stellung, die einem Eindringen des Rohrs (4) in die Aufnahme (14) zwischen dem Befestigungsring (23) und dem rohrförmigen Ansatz (3) entspricht, mindestens teilweise bewegbar ist.

8. Kupplung nach Anspruch 7, wobei ein Teil (43, 48, 89) des Visualisierungsorgan zur Achse des Ansatzes (3) der Kupplung parallel verschiebbar ist.

9. Kupplung nach einem der Ansprüche 7 oder 8, wobei ein Teil (59, 60, 68, 78, 88) des Visualisierungsorgans im Verhältnis zum Ansatz (3) radial bewegbar ist.

10. Kupplung nach Anspruch 9, wobei der Kontaktabschnitt (64, 72) einen nockenförmigen Teil aufweist, der dazu bestimmt ist, mit dem Ende des Rohrs derart zusammenzuarbeiten, dass die axiale Einführbewegung des Rohrs in eine radiale Bewegung mindestens eines Abschnitts des Visualisierungsorgans (58, 68) umgewandelt wird.

11. Kupplung nach Anspruch 9 und den folgenden, wobei das Visualisierungsorgan (78, 88) Rückhaltemittel (82, 94) gegen eine radiale Bewegung umfasst.

12. Kupplung nach Anspruch 11, wobei die Rückhaltemittel eine Kante (82) umfassen, die dazu bestimmt ist, sich auf einem Teil des Befestigungsrings (23) abzustützen.

13. Kupplung nach Anspruch 11, wobei das Visualisierungsorgan (88) einen ersten bewegbaren Teil umfasst, der den Kontaktabschnitt (96) aufweist, und einen zweiten Teil (90), der von außerhalb der Kupplung sichtbar ist und Rückhaltemittel (94) auf dem ersten Teil (89) umfasst.

14. Kupplung nach einem der vorhergehenden Ansprüche, wobei das Visualisierungsorgan (38, 48) vollständig im Befestigungsring aufgenommen ist.

15. Kupplung nach einem der vorhergehenden Ansprüche, wobei das Visualisierungsorgan (58, 68, 78, 88) mindestens einen äußeren Abschnitt (62, 69, 79, 92) umfasst, der dazu bestimmt ist, auf dem äußeren Teil der Kappe (13) platziert zu sein.

16. Kupplung nach Anspruch 15, wobei der äußere Abschnitt (62, 69, 79, 92) des Visualisierungsorgans einen Ringteil aufweist, der einen Abschnitt des Umfangs der Kappe (13) bedeckt.

17. Kupplung nach Anspruch 15, wobei der äußere Abschnitt (62, 69, 79, 92) mindestens zwei Teile (59, 60) aufweist, die jeweils einen Teil des Umfangs der Kupplung bedecken, wobei diese zwei Teile durch eine Schwachzone verbunden sind oder Befestigungsmittel (65, 66), die eine Freisetzung der zwei Teile beim Einführen des Rohrs (4) und einem Stoß des Rohrs (4) gegen den Kontaktabschnitt (64) erlauben.

18. Kupplung nach einem der vorhergehenden Ansprüche, wobei das Visualisierungsorgan einen Ring (38, 48, 58, 68, 89) umfasst, der sich um den Ansatz (3) erstreckt.

19. Kupplung nach einem der vorhergehenden Ansprüche, wobei das Visualisierungsorgan (48, 88) einen zur Visualisierung (49, 95) bestimmten Abschnitt umfasst, der dazu bestimmt ist, um das Ende des zu kuppelnden Rohrs positioniert zu sein und sich in Richtung des freien Endes des Ansatzes im Verhältnis zum Kontaktabschnitt (53, 96) des Visualisierungsorgans befindet.

20. Kupplung nach einem der vorhergehenden Ansprüche, wobei das Visualisierungsorgan (48) Rückkehrmittel in eine Ausgangsstellung beim Herausziehen des Rohrs (4) aus der Kupplung aufweist.

21. Kupplung nach Anspruch 20, wobei die Rückkehrmittel von Klemmmitteln (54) gebildet werden, die dazu bestimmt sind, das Ende des Rohrs des Visualisierungsorgans (48) zu verbinden.

22. Kupplung nach Anspruch 20, wobei die Rückkehrmittel elastische Rückholmittel umfassen.
